# EUROPEAN PATENT APPLICATION

(11) **EP 3 492 898 A1**
(43) Date of publication of application: **05.06.2019**
(21) Application number: 17204507.2
(22) Date of filing: 29.11.2017
(51) Int. Cl.: G01M 13/02

(54) **DIAGNOSTIC APPARATUS, METHOD AND COMPUTER PROGRAM FOR DIAGNOSING FAULTY OPERATION OF A DEVICE**

(71) Applicant: Vestel Elektronik Sanayi ve Ticaret A.S., 45030 Manisa (TR)
(72) Inventor: YILDIZ, Kadir, 45030 Manisa (TR); ARDALI, Emre, 45030 Manisa (TR); ER, Alper Sair, 45030 Manisa (TR)
(74) Representative: Page White & Farrer

(57) **Abstract**

A diagnostic apparatus (100) for diagnosing faulty operation of a device comprises a microphone (402) for receiving sound generated by a device (200) during operation of the device (200) and producing an audio signal therefrom, and a signal processor (107) constructed and arranged to determine faulty operation of the device (200) based at least in part on the audio signal information.

## Description

### Technical Field

The present disclosure relates to a diagnostic apparatus, method and computer program for diagnosing faulty operation of a device.

### Background

Electronics systems are often designed using a number of electronic components, with each component manufactured to a strict tolerance to meet modern technology needs. The components may fail due to defects or age, leading the system to fail to operate in the desired manner. Component failures may be especially prevalent in systems which have operating environments using high currents, or high temperatures, such as power supplies. When these failures occur, it can require time consuming hardware debugging to fix the problem. This can result in an increase in servicing costs, increased downtime, and reduced user satisfaction.

### Summary

According to a first aspect disclosed herein, there is provided a diagnostic apparatus for diagnosing faulty operation of a device, the diagnostic apparatus comprising: a microphone for receiving sound generated by a device during operation of said device and producing an audio signal therefrom; and a signal processor constructed and arranged to determine faulty operation of said device based at least in part on the audio signal.

In embodiments, the signal processor may be constructed and arranged to identify a faulty component of the device by detecting a characteristic frequency of the audio signal corresponding to the faulty component.

The signal processor may be constructed and arranged to identify a faulty power switching circuit component of the device by detecting a characteristic frequency of the audio signal corresponding to an auto-recovery time of the faulty power switching circuit.

The signal processor may comprise a filter having a filter frequency corresponding to the characteristic frequency, wherein the filter may be constructed and arranged to filter the audio signal so as to filter-out frequency components outside of a frequency band defined by the filter frequency, wherein the signal processor may be constructed and arranged to identify the faulty component based on the filtered signal.

The signal processor may comprise a plurality of filters, each having a filter frequency corresponding to a different characteristic frequency for identifying different faulty components.

The diagnostic apparatus may comprise a memory configured to store a frequency indicator and associated component data, wherein the signal processor may be constructed and arranged to match the characteristic frequency with the stored frequency indicator, and identify the faulty component based on the component data associated therewith.

The memory may be configured to store multiple frequency indicators and, in association with each of the frequency indicators, respective component data, wherein the signal processor may be constructed and arranged to match the characteristic frequency to one of the frequency indicators, and identify the faulty component based on the component data associated therewith.

The diagnostic apparatus may comprise a logging unit configured to record information about the faulty operation in a database.

Another aspect of this disclosure provides a method of diagnosing faulty operation of a device, the method comprising, at a diagnostic apparatus: using a microphone of the diagnostic apparatus to receiving sound generated by a device during operation of said device and produce an audio signal therefrom; and processing, by a signal processor of the diagnostic apparatus, the audio signal to determine faulty operation of said device based at least in part on the audio signal.

In embodiments, the method may comprise storing a record of the fault in the database and using the record in the database to identify and repair the fault.

Another aspect of this disclosure provides a computer program comprising computer-readable instructions stored on a computer-readable storage medium and configured, when executed on a diagnostic apparatus, to implement the method.

Another aspect of the present disclosure provides a system comprising: a device component; a microphone for receiving sound when generated by the device component during operation of said device component and producing an audio signal therefrom; and a signal processor constructed and arranged to determine faulty operation of the device component based at least in part on the audio signal.

The device component may be a power switching component having an auto-recovery time, wherein the signal processor may be constructed and arranged to detect a fault with the power switching circuit component by detecting a characteristic frequency of the audio signal corresponding to the auto-recovery time.

The system may comprise multiple power switching components, each having a different auto-recovery time to allow the components to be distinguished by the signal processor.

### Brief Description of the Drawings

To assist understanding of the present disclosure and to show how embodiments may be put into effect, reference is made by way of example to the accompanying drawings in which:
Figure 1 shows schematically a block diagram for an example diagnostic apparatus;
Figure 2 shows schematically an example power switching circuit component; and
Figure 3 shows an example graph of a time-varying current drawn as a result of a faulty power switching circuit component triggering an auto-recover mechanism.

### Detailed Description

Many electronics systems in use today are susceptible to hardware failures, particularly in system domains which demand high current. Power supply stages are especially vulnerable in this respect. Currently such failures necessitate time consuming hardware debugging to fix the problem, as well as causing increased service time and costs and user dissatisfaction.

Herein, an example diagnostic apparatus is provided which can detect a failure of a particular power switching component and inform a logging system (e.g. on a file system or online alarm mechanism etc.).

A power switching circuit is a form of transformer, which comprises a switching power circuit and at least one coil for performing power transformation via electromagnetic induction effected by the coil, such as a step-up or stepdown voltage conversion. Such components are found in a wide variety of devices including television (TV) systems and other consumer systems which perform stepdown with coils.

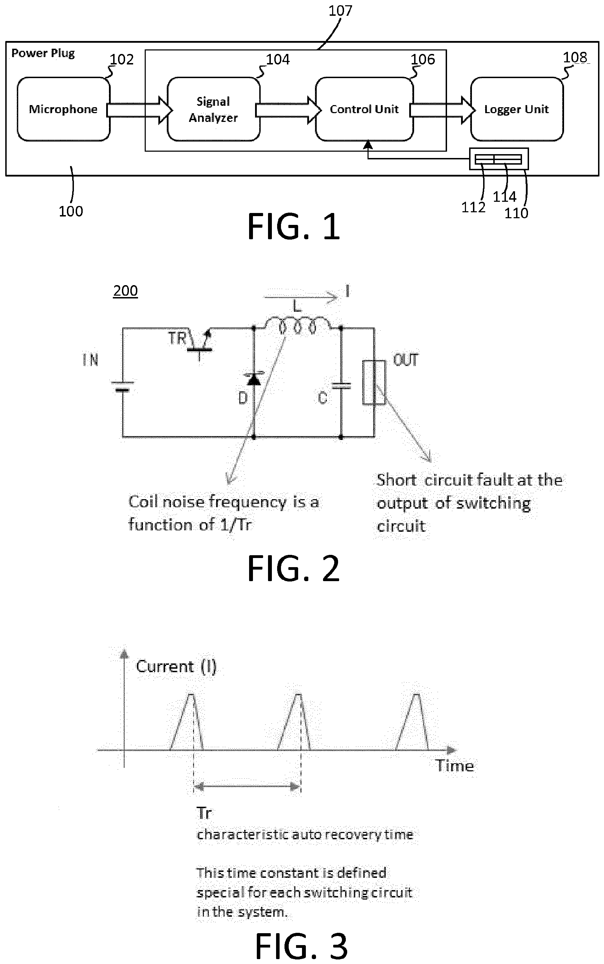

With reference to Figure 2, a typical power switching circuit component 200 includes a switching integrated circuit (IC) and a coil L that functions as a transformer, such as a stepdown voltage transformer. When there is a failure such as a short circuit at the output of switching circuit (OUT), the failure may cause a high current to be pulled (drawn) from the output of the switching circuit.

With reference to Figure 3, most switching ICs have a short circuit protection mechanism that cuts the output power (current and voltage) if the pulled current is higher than a value the IC can supply safely. After cutting the current, the short circuit protection mechanism will release the protection (called auto-recovery) and provides output power again. That is, the protection mechanism detects over current caused by a short circuit and disables the switching temporarily in response, and then activates the switching again shortly after.

This can be effective mechanism for managing transient problems. However, in the case of a persisting failure, this will cause the circuit to once again pull high current and the IC will cut power again in response. This cycle continues, periodically deactivating and reactivating the circuit. This activation/deactivation cycle has a period, referred to herein as the auto-recovery time (Tr). This can be relatively short, such that the circuit is repeatedly activating and deactivating hundreds or even thousands of times a second, corresponding to a frequency of hundreds or thousands of Hz. This is because such short circuit protection mechanisms are only designed to accommodate transient short circuits and are not designed to deal with persistent faults. Such fault condition detection mechanisms prevent more costly damage or malfunction of the whole system.

Note that the circuit 200 of Figure 2 is just one example of a power switching component, and other configurations are viable. Herein the term power switching circuit component means an electrical component having a power conversion coil and a protection mechanism with auto-recovery functionality, which temporarily disconnects the coil when the power switching component draws excessive current or power for a specified interval of time before reconnecting it, such that a persistent failure causes periodic activation/deactivation (the period being the auto-recovery time).

This causes the coil L to emit sonic noise at a frequency (f) that depends on the auto-recovery time (Tr) of the switching IC, i.e. f=1/Tr. This is because high current flowing through a coil and then sudden fading of the current density cause the coil windings to enlarge and shrink (because of the resulting magnetic force), thus creating coil noise with frequency f.

Because of the way it is generated, coil noise thus has a characteristic frequency f corresponding to the auto-recovery time, and because of its uniform periodic structure over time it is easy to detect. For example, coil noise is straightforward to detect in a frequency spectrum as it corresponds to a distinct peak at the characteristic frequency in the frequency domain.

This auto-recovery time can be set the switching ICs specifically; that is, different types of power switching component can be intentionally configured with different auto-recovery times to allow them to be distinguished based on the frequency of coil noise they emit when faulty. So, in design, every switching component will have a specific auto-recovery time. This will help to detect and identify a particular type of failed switching component. In other words, the auto-recovery time is tuned so as to function as an identifier of the power switching component or an identifier of a type of the power switching component, in the knowledge that that component will emit coil noise having that frequency when that component develops a fault. Note that, in this context the term "fault" refers specifically to a type of persisting fault that causes the cyclic auto-recovery behaviour described above, such as a persisting short circuit. In other contexts, the term fault refers to a fault that creates some form of characteristic sonic output that can be used to detect the fault.

In a device with multiple switching circuits, when a short circuit fault occurs at the output of a particular switching circuit, this triggers an overcurrent detection thus instigating the auto recovery mechanism for that circuit. The auto-recovery mechanism has its own special time constant, i.e. the auto-recovery time. Because each switching circuit in the system has a different (characteristic) auto recovery time constant, during auto recovery of one component, the coil in that component will emis coil noise because of the resulting high current flow. Since each switching circuit has a characteristic auto-recovery time constant, any coil noise will be at different frequency for each switching circuit.

In the following examples this is exploited to allow reliable detection and identification of faulty power switching components based on coil noise using simple filtering without having to resort to complex audio signal processing or complex spectral analysis.

Figure 1 shows a schematic block diagram of the example diagnostic apparatus 100, which is shown to comprise a microphone 102, a signal analyser 104, a control unit 106, a logging unit 108 and a memory 110. The signal analyser 104 is shown having an input connected to an output of the microphone 102 for receiving an audio signal generated by a transducer the microphone 102 in response to sound received thereat. The control unit 106 has an input connected to an output of the signal analyser 104, and the logging unit 108 has an input connected to an output of the control unit 106. The control unit 106 is shown connected to the memory 110 for accessing data stored therein.

The microphone 102 is used to capture coil noise when present and the signal analyser 104 is used to analyse the captured sound information and detect coil noises at predetermined frequencies.

The signal analyser 104 and the control unit 106 together are an example of a signal processor 107 as that term is used herein. The signal processor 107 processes the audio signal received from the microphone in order to identify and detect, when present, a characteristic frequency corresponding to the auto-recovery time of a particular faulty power switching component; that is, to detect and identify a particular frequency of coil noise when present, which in turn can be resolved to a specific (type of) power switching component in accordance with the principles described above. The control unit 104 can be a logic device configured to classify a failed switching circuit.

The signal analyser 104 processes the signal in order to isolate a particular frequency component or particular frequency components. For example, the signal analyser 104 may comprise one or more filters, (each of) which is centred on the frequency component of interest, so that the output of that filter can be used to determine whether or not coil noise is present at that frequency. This could for example be determined by comparing an energy or magnitude of the or each filtered signal with a (respective) threshold. In this manner, the signal analyser 104 can detect coil noise when present and measure the frequency of the coil noise.

If and when a particular frequency of coil noise is detected by the signal analyser 104, the control unit 106 uses this frequency to identify the (type of) power switching component from which the coil noise is originating. It does so by accessing a lookup table (or other such data structure) held in the memory 110, in which different coil noise frequency values 112 are associated with respective component data 114. By matching the detected coil noise frequency to one of the stored frequency values, the control unit 106 can identify the faulty component based on the component data associated with the matching frequency value.

Storing multiple frequency values with associated component data has several benefits. Firstly, in a device that has multiple power switching components, the diagnostic apparatus 100 is able to distinguish between these. Secondly, it allows the diagnostic apparatus 100 to be used in conjunction with different devices having different power switching components. This allows the diagnostic apparatus 100 to be configured ready for use without having to know in advance which type of device it is going to be used with.

Examples of the apparatus 100 in use will now be described to further aid understanding.

In use, the microphone 102 listens for noises on the system. When there is no failure on the switching component(s), the low current on the coil at most emits sound at a very low sound level. But if there is a failure, the resulting high current through the coil will emit a significantly louder sound, in the form of coil noise. The microphone 102 sends the measured sound data to the signal analyser unit 104. The signal analyser unit 104 may have filters to detect the coil sound and eliminate the other sounds. The signal analyser unit 104 analyses the sound to calculate the frequency of the sound. After calculating it, the signal analyser 104 sends the frequency information to the control unit 106. The control unit 106 receives the frequency information and evaluates which switching circuit has failed. The control unit 106 has access to the memory 110 in which the frequencies 112 for the failed switching components are stored. The control unit 106 locates the component data 112 for failed component that is associated with the detected coil noise frequency. The control unit 106 communicates the failure details to the logging unit 108. The logging unit 108 receives the data and stores the failure details as a record in a database, which can be local (e.g. a file) or remote (e.g. online).

For example, based on the frequency information, 1kHz of coil noise could be interpreted by the control unit 106, and logged, by the logging unit 108, as "5V stepdown has short circuit."

Once a fault has been identified and logged, the record of the fault can be accessed and used, e.g. by repair technician, to repair the fault.

As will be appreciated the examples above represent various possible ways of implementing the technology, but alternative implementations within the scope of the claims may be equally viable. For example, Fourier or other spectral analysis of the audio could be used as an alternative to filtering. As another example, captured audio could be compared with stored audio data to allow noise to be identified. This could for example be done by comparing an audio fingerprint of the data with corresponding audio fingerprints of known components. Although the above examples have been described in the context of power switching circuit components, the technology can be applied to detect faults with other types of component that have characteristic sonic properties when faulty.

The diagnostic apparatus 100 and its components 104-108 as shown in Figure 1 are represented as a schematic block diagram for the purposes of explaining the functionality of apparatus 100. Hence, it is understood that each component of the apparatus 100 is a functional block for performing the functionality ascribed to it herein. Each component may be implemented in hardware, software, firmware, or a combination thereof. Additionally, although described as separate components of the apparatus 100, some or all of the functionality may be performed by a single piece of hardware, software, or firmware. A software implementation means that at least part of the functionality is implemented by computer-readable instructions executed on a processor or processing system comprising one or more processors, such as a CPU(s) or microcontroller(s).

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein a memory for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A diagnostic apparatus for diagnosing faulty operation of a device, the diagnostic apparatus comprising:
a microphone for receiving sound generated by a device during operation of said device and producing an audio signal therefrom; and
a signal processor constructed and arranged to determine faulty operation of said device based at least in part on the audio signal.

2. A diagnostic apparatus according to claim 1, wherein the signal processor is constructed and arranged to identify a faulty component of the device by detecting a characteristic frequency of the audio signal corresponding to the faulty component.

3. A diagnostic apparatus according to claim 2, wherein the signal processor is constructed and arranged to identify a faulty power switching circuit component of the device by detecting a characteristic frequency of the audio signal corresponding to an auto-recovery time of the faulty power switching circuit component.

4. A diagnostic apparatus according to claim 2 or claim 3, wherein the signal processor comprises a filter having a filter frequency corresponding to the characteristic frequency, wherein the filter is constructed and arranged to filter the audio signal so as to filter-out frequency components outside of a frequency band defined by the filter frequency, wherein the signal processor is constructed and arranged to identify the faulty component based on the filtered signal.

5. A diagnostic apparatus according to claim 4, wherein the signal processor comprises a plurality of filters, each having a filter frequency corresponding to a different characteristic frequency for identifying different faulty components.

6. A diagnostic apparatus according to any of claims 2 to 5, comprising:
a memory configured to store a frequency indicator and associated component data, wherein the signal processor is constructed and arranged to match the characteristic frequency with the stored frequency indicator, and identify the faulty component based on the component data associated therewith.

7. A diagnostic apparatus according to claim 6, wherein the memory is configured to store multiple frequency indicators and, in association with each of the frequency indicators, respective component data, wherein the signal processor is constructed and arranged to match the characteristic frequency to one of the frequency indicators, and identify the faulty component based on the component data associated therewith.

8. A diagnostic apparatus according to any of the preceding claims, comprising a logging unit configured to record information about the faulty operation in a database.

9. A method of diagnosing faulty operation of a device, the method comprising, at a diagnostic apparatus:
using a microphone of the diagnostic apparatus to receiving sound generated by a device during operation of said device and produce an audio signal therefrom;
processing, by a signal processor of the diagnostic apparatus, the audio signal to determine faulty operation of said device based at least in part on the audio signal.

10. A method according to claim 9, comprising:
storing a record of the fault in the database; and
using the record in the database to identify and repair the fault.

11. A computer program comprising computer-readable instructions stored on a computer-readable storage medium and configured, when executed on a diagnostic apparatus, to implement the method of claim 9.

12. A system comprising:
a device component;
a microphone for receiving sound when generated by the device component during operation of said device component and producing an audio signal therefrom; and
a signal processor constructed and arranged to determine faulty operation of the device component based at least in part on the audio signal.

13. A system according to claim 12, wherein the device component is a power switching component having an auto-recovery time;
wherein the signal processor is constructed and arranged to detect a fault with the power switching component by detecting a characteristic frequency of the audio signal corresponding to the auto-recovery time.

14. A system according to claim 13, wherein the system comprises multiple power switching components, each having a different auto-recovery time to allow the components to be distinguished by the signal processor.
